# EUROPÄISCHE PATENTSCHRIFT

(11) **EP 1 736 365 B1**
(45) Veröffentlichungstag und Bekanntmachung des Hinweises auf die Patenterteilung: **05.03.2008**
(21) Anmeldenummer: 06010651.5
(22) Anmeldetag: 24.05.2006
(51) Int. Cl.: B60R 13/01, B60R 5/04

(54) **Laderaumfunktionsvorrichtung für ein Kraftfahrzeug**
Functional device for a vehicle luggage compartment.
Dispositif fonctionnel pour compartiment à bagages de véhicule

(30) Priorität: 24.06.2005 DE 102005031072
(43) Veröffentlichungstag der Anmeldung: 27.12.2006
(73) Patentinhaber: BOS GmbH & Co. KG, 73760 Ostfildern (DE)
(72) Erfinder: Bohlke, Hartmut, 42369 Wuppertal (DE); Sitzler, Wolfgang, 42111 Wuppertal (DE)
(74) Vertreter: Patentanwälte Ruff, Wilhelm, Beier, Dauster & Partner

(56) Entgegenhaltungen:
- DE-A1- 10 149 186
- US-A- 3 132 755
- US-A- 5 409 335
- PATENT ABSTRACTS OF JAPAN Bd. 2003, Nr. 12, 5. Dezember 2003 (2003-12-05) & JP 2005 067393 A (KASAI KOGYO CO LTD), 17. März 2005 (2005-03-17)

## Beschreibung

Die Erfindung betrifft eine Laderaumfunktionsvorrichtung für ein Kraftfahrzeug, insbesondere für einen Personenkraftwagen, mit mehreren, in wenigstens einer Begrenzungsfläche des Laderaumes integrierten Führungsschienen, die insbesondere längs und/oder quer in der Begrenzungsfläche verlaufen, sowie mit wenigstens einem Funktionsschlitten, der formschlüssig in der Führungsschiene gehalten und längs der Führungsschiene verschiebbar angeordnet ist sowie wenigstens ein Blockiermittel umfasst, das zum Freigeben und Arretieren des Funktionsschlittens ausgebildet ist.

Eine derartige Laderaumfunktionsvorrichtung ist aus der DE 101 49 186 B4 bekannt. Die bekannte Laderaumfunktionsvorrichtung weist wenigstens eine Führungsschiene auf, die in einem Laderaumboden integriert sein kann. In der Führungsschiene ist wenigstens ein als Lastöse ausgebildeter Funktionsschlitten verschiebbar angeordnet, der mit einem manuell betätigbaren Sperrelement versehen ist. Das Sperrelement weist einen Bolzen auf, der in korrespondierende Aussparungen eines in der Führungsschiene integrierten Lochstreifens eingreifen kann. Sobald der entsprechende Bolzen des Sperrelementes in eine entsprechende Aussparung des Lochstreifens eingerastet ist, ist der Funktionsschlitten relativ zu der Führungsschiene axial blockiert. Durch einfache manuelle Betätigung eines in dem Funktionsschlitten angeordneten Tasters kann der Bolzen des Sperrelementes aus dem Lochstreifen wieder gelöst werden, wodurch der Funktionsschlitten erneut relativ zu der Führungsschiene verschiebbar ist. Der Funktionsschlitten ist in der Führungsschiene crashsicher gehalten, indem er ein T-Profil besitzt, das formschlüssig in einem C-förmigen Hohlprofil der Führungsschiene geführt ist.

Aufgabe der Erfindung ist es, eine Laderaumfunktionsvorrichtung der eingangs genannten Art zu schaffen, die eine crashsichere Verankerung des Funktionsschlittens in der Führungsschiene und dennoch eine leichtgängige Verschiebbarkeit des Funktionsschlittens ermöglicht.

Diese Aufgabe wird dadurch gelöst, dass der Funktionsschlitten mittels wenigstens eines Rollelementes rollbeweglich an der Führungsschiene gelagert ist. Durch die so erzielte Rollreibung ist der Reibwiderstand beim Verschieben des Funktionsschlittens innerhalb der Führungsschiene reduziert, so dass eine besonders leichtgängige Axialverlagerung des Funktionsschlittens relativ zu der Führungsschiene erzielbar ist. Für eine Bedienperson ist somit ein relativ geringer Kraftaufwand erforderlich, um den Funktionsschlitten zu verfahren. Insbesondere in Bereichen eines Laderaumes, die ergonomisch für eine Bedienperson relativ schwierig zu erreichen sind, wird die Handhabung des wenigstens einen Funktionsschlittens erheblich erleichtert.

In Ausgestaltung der Erfindung liegt das wenigstens eine Roiieiement außenseitig auf der Führungsschiene auf. Bereits das Eigengewicht des Funktionsschlittens drückt somit das wenigstens eine Rollelement von oben her auf die Führungsschiene, so dass eine sichere Auflage und eine sichere Rollfunktion des Funktionsschlittens gewährleistet ist.

In weiterer Ausgestaltung der Erfindung ist jeder Funktionsschlitten mit wenigstens zwei Rollelementachsen versehen. Dadurch bildet der Funktionsschlitten eine Art Rollwagen, der statisch bestimmt mit seinen wenigstens zwei Rollelementachsen auf der Führungsschiene aufliegt. Dabei können als Rollelemente pro Rollelementachse jeweils eine durchgängige Rollwalze oder zwei den Funktionsschlitten beidseitig flankierende Rollelemente wie Räder, Scheiben, Kugeln oder ähnliches vorgesehen sein.

In weiterer Ausgestaltung der Erfindung sind wenigstens zwei zueinander parallel beabstandete Führungsschienen vorgesehen, in denen jeweils wenigstens ein Funktionsschlitten rollbeweglich gelagert ist. Dadurch ist die Einsatzfähigkeit der Laderaumfunktionsvorrichtung sowie deren Variabilität weiter erhöht.

In weiterer Ausgestaltung der Erfindung ist ein formstabiler Trägerkörper vorgesehen, der sich zwischen den Führungsschienen erstreckt und mit den Funktionsschlitten verbunden ist. Der formstabile Trägerkörper erstreckt sich quer zu der Längsausrichtung der Führungsschienen und kann insbesondere zur Ladegutsicherung, zur Aufteilung des Laderaumes in mehrere horizontal oder vertikal zueinander benachbarte Abschnitte oder zur Abtrennung des Laderaumes von einem Fahrgastraum vorgesehen sein.

In weiterer Ausgestaltung der Erfindung ist der Trägerkörper als ebene Platte gestaltet, die von den Funktionsschlitten getragen ist. Vorteilhaft kann diese ebene Platte auch ais verschiebbarer Laderaumboden gestaltet sein. Alternativ kann sie zur Abteilung zweier Laderaumabschnitte voneinander oder zu ähnlichen Funktionen eingesetzt werden.

In weiterer Ausgestaltung der Erfindung ist die Trägerplatte an beiden Funktionsschlitten um eine gemeinsame Schwenkachse schwenkbeweglich gelagert. Dadurch kann die Trägerplatte insbesondere sowohl vertikal aufgestellt als auch horizontal liegend eingesetzt werden.
In weiterer Ausgestaltung der Erfindung ist an dem Trägerkörper wenigstens ein Verankerungselement zur Befestigung wenigstens eines Zugmittels vorgesehen. Das Verankerungselement ist insbesondere als Lastöse ausgeführt.

In weiterer Ausgestaltung der Erfindung sind die Führungsschienen im Bereich ihrer Oberseite mit wenigstens einer Aussparung zum Entfernen oder Einsetzen wenigstens eines Funktionsschlittens versehen. Je nach Bedarf kann somit ein Funktionsschlitten manuell durch eine entsprechende Bedienperson sowie vorzugsweise ohne die Zuhilfenahme von Werkzeugen in eine entsprechende Führungsschiene eingesetzt oder aus dieser entnommen werden. Vorzugsweise ist die wenigstens eine Aussparung in einem Endbereich der jeweiligen Führungsschiene vorgesehen, so dass die übrige Länge der Führungsschiene für die Führung und Sicherung des entsprechenden Funktionsschlittens eingesetzt werden kann.

In weiterer Ausgestaltung der Erfindung sind Mittel zum lösbaren laderaumseitigen Fixieren der Trägerplatte in einer aufrechten, vorzugsweise einer vertikalen Separierposition vorgesehen. Dadurch ist es möglich, die Trägerplatte aufzustellen und als Trennplatte für zwei Laderaumabschnitte einzusetzen.

In weiterer Ausgestaltung der Erfindung sind wenigstens zwei Funktionsschlitten zu den mit der Schwenkachse versehenen Funktionsschlitten beabstandet an der Trägerplatte befestigt. Mittels dieser Funktionsschlitten liegt die Trägerplatte in ihrer horizontalen Bodenposition auf insgesamt vier Funktionsschlitten auf und ist somit sicher abgestützt und gut rollbeweglich.

In weiterer Ausgestaltung der Erfindung umfassen die Blockiermittel zum Freigeben oder Arretieren des Funktionsschlittens eine bewegliche Betätigungstaste, die durch eine Aussparung in der Trägerplatte hindurchragt und in einer horizontalen Bodenposition der Trägerplatte von oben her zugänglich ist. Dadurch ist es möglich, bei auf den Funktionsschlitten aufliegender Trägerplatte ergonomisch günstig die Arretierung des Funktionsschlittens zu lösen oder zu aktivieren.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.
- Fig. 1: zeigt in perspektivischer Darstellung einen Laderaum eines Kombi-Personenkraftwagens mit einer Ausführungsform einer erfindungsgemäßen Laderaumfunktionsvorrichtung,
- Fig. 2: den Laderaum nach Fig. 1 mit der Laderaumfunktionsvorrichtung, bei der eine Trägerplatte in aufrechter Separierposition dargestellt ist,
- Fig. 3: die Laderaumfunktionsvorrichtung nach den Fig. 1 und 2, bei der die Trägerplatte als verschiebbare Bodenplatte eingesetzt ist,
- Fig. 4: die Laderaumfunktionsvorrichtung nach Fig. 3 in einer anderen Funktionsposition,
- Fig. 5: in verkleinerter Darstellung den Laderaum nach den Fig. 1 bis 4 mit einer horizontal ausgerichteten, verschiebbaren Trägerplatte,
- Fig. 6: in vergrößerter, perspektivischer Darstellung einen Ausschnitt der Laderaumfunktionsvorrichtung nach den Fig. 1 bis 5 und
- Fig. 7: in vergrößerter, perspektivischer Darstellung einen weiteren Ausschnitt der Laderaumfunktionsvorrichtung nach den Fig. 1 bis 6.

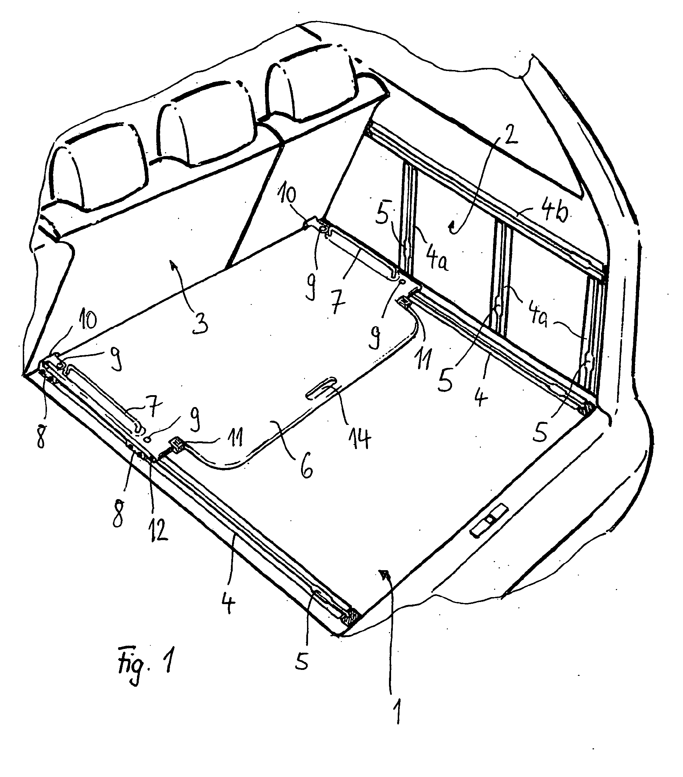

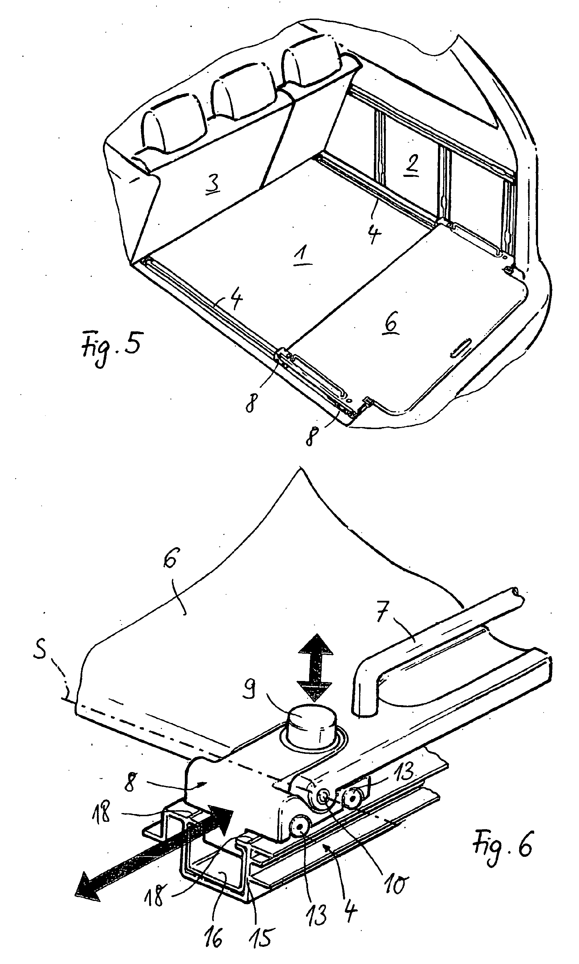

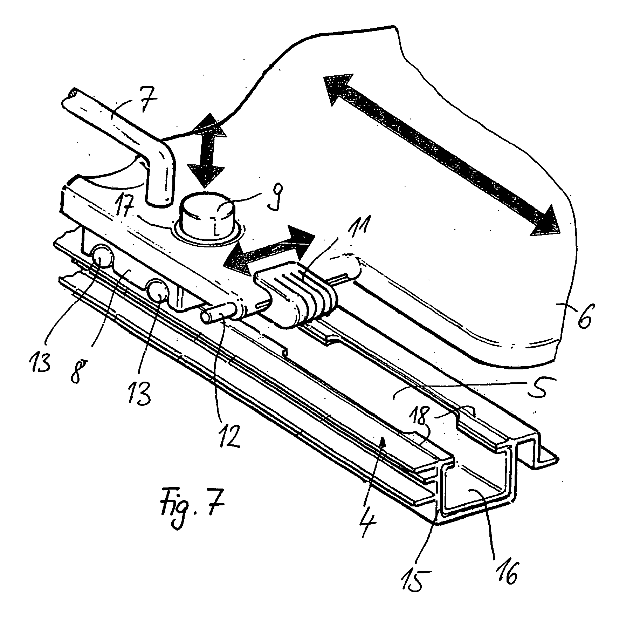

Ein Kraftfahrzeug in Form eines Kombi-Personenkraftwagens weist gemäß den Fig. 1 bis 7 einen Laderaum auf, der hinter einer Fondsitzbank 3 in einem Heckbereich des Kraftfahrzeugs angeordnet ist und vom Fahrzeugheck her über eine zu öffnende Heckklappe zugänglich ist. Der Laderaum weist einen Laderaumboden 1 auf, der nach vorne durch eine Rückenlehnenanordnung der Fondsitzbank 3 und zu den gegenüberliegenden Fahrzeugseiten hin durch jeweils eine Seitenwandung 2 begrenzt ist. Sowohl im Laderaumboden 1 als auch in den gegenüberliegenden Seitenwandungen 2 sind Führungsschienen 4, 4a, 4b so integriert, dass die Führungsschienen 4 bis 4b mit ihren Oberseiten zumindest weitgehend bündig mit der entsprechenden Laderaumbegrenzungsfläche, insbesondere dem Laderaumboden 1 oder einer der beiden Seitenwandungen 2, abschließen. Die Führungsschienen 4, 4a, 4b sind crashsicher im Laderaum befestigt. Im Bereich des Laderaumbodens 1 erstrecken sich zwei Führungsschienen 4 parallel zueinander und in Fahrzeuglängsrichtung, wobei diese beiden Führungsschienen 4 an gegenüberliegenden Seitenrandbereichen des Laderaumbodens 1 vorgesehen sind. In den Seitenwandungen erstrecken sich mehrere Führungsschienen 4 parallel zueinander nach oben, vorzugsweise vertikal nach oben. Die Seitenwandungen 2 sind zumindest bis zu den oberen Führungsschienen 4b eben gestaltet und rechtwinklig zu dem horizontalen Laderaumboden 1 ausgerichtet. Die Seitenwandungen 2 sind somit in zueinander parallelen Vertikalebenen ausgerichtet. Oberhalb der Führungsschienen 4a erstreckt sich horizontal in Fahrzeuglängsrichtung jeweils eine Führungsschiene 4b über die Länge des Laderaumes. Alle Führungsschienen 4 bis 4b weisen gemäß den Fig. 6 und 7 ein Trägerprofil 15 auf, das in der jeweiligen Begrenzungsfläche verankert ist. Jedes Trägerprofil 15 weist ein im wesentlichen C-förmiges Querschnittsprofil auf, das in der Ebene der jeweiligen Begrenzungsfläche mit einer durchgängigen Längsnut versehen ist. In jedem Trägerprofil 15 ist ein Lochprofil 16 bündig angeordnet, das korrespondierend zu dem C-förmigen Querschnittsprofil ebenfalls mit einem etwas kleineren, C-förmigen Querschnittsprofil versehen ist. Auch das Lochprofil 16 ist somit zu seiner Oberseite hin offen. Ein Boden des Lochprofils 16 ist mit einer Reihe von vorzugsweise gleichmäßig in Längsrichtung zueinander beabstandeten Rastlöchern versehen, deren Funktion nachfolgend noch näher beschrieben wird. Die Rastfunktion der Rastlochreihe entspricht der Rastfunktion des Lochstreifens, der in der DE 101 49 186 B4 beschrieben ist.

In jeder der beschriebenen Führungsschienen 4 bis 4b ist wenigstens ein Funktionsschlitten 8 einsetzbar. Wie anhand der Fig. 1 bis 7 erkennbar ist, ist ein derartiger Funktionsschlitten 8 als Schlittenwagen ausgeführt, der zwei Rollenachsen mit insgesamt vier Rollelementen 13 umfasst. Auf der Oberseite des Trägerprofils 15 jeder Führungsschiene 4 bis 4b sind flache Führungsstege 18 vorgesehen, die sich in Längsrichtung der jeweiligen Führungsschiene 4 bis 4b erstrecken und eine schienenartige Längsführung für den Schlittenwagen und insbesondere die Rollelemente 13 bieten. Die Rollelemente 13 laufen auf der Oberseite der jeweiligen Führungsschiene 4 bis 4b. Jeder Funktionsschlitten oder Schlittenwagen 8 ist mit einem T-förmigen Sicherungsprofil versehen, das in der Nut der entsprechenden Führungsschiene 4 bis 4b geführt ist. Jede Führungsschiene 4 bis 4b weist Aussparungsbereiche 5 auf, an denen die Schlittenwagen 8 mit ihren T-förmigen Sicherungsprofilen aus der Nut der jeweiligen Führungsschiene 4 bis 4b entnommen oder in diese eingesetzt werden können. Es ist in nicht dargestellter Weise möglich, jeden Funktionsschlitten 8 in der beschriebenen Weise als Einzelteil auszuführen und somit beispielsweise für die Aufnahme einer Lastöse gemäß der DE 101 49 186 B4 auszuführen. Derartige Funktionsschlitten können insbesondere auch in die Führungsschienen 4, 4a und 4b der vertikalen Seitenwandungen 2 eingesetzt und dort arretiert werden.

Jeder Funktionsschlitten 8, sei es als Einzelteil oder gemäß der Ausführungsform nach den Fig. 1 bis 7 ist mit einem Blockiermechanismus versehen, dessen grundsätzlicher Aufbau dem Arretiermechanismus der DE 101 49 186 B4 entspricht. In nicht näher dargestellter Weise ist in jedem Funktionsschlitten 8 ein Rastbolzen quer zur Schieberichtung des Funktionsschlittens 8 beweglich gelagert, um in ein entsprechendes Rastloch des Lochprofils 16 eingreifen zu können. Ein Betätigungsknopf 9 dient dazu, den Rastbolzen in das entsprechende Rastloch einzurasten oder aus diesem zu lösen. Hierzu ist dem Rastbolzen in grundsätzlich bekannter Weise eine Rückstellfeder zugeordnet, die den Rastbolzen in die entriegelte Stellung überführt.

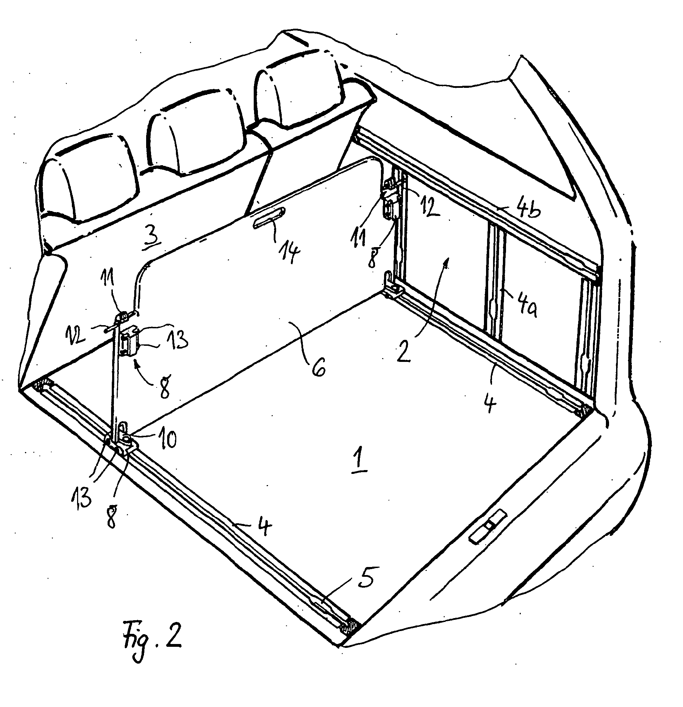

Beim dargestellten Ausführungsbeispiel nach den Fig. 1 bis 7 sind insgesamt vier Funktionsschlitten 8 durch eine gemeinsame Trägerplatte 6 miteinander verbunden, die sich über die Breite des Laderaumes und über etwas weniger als die Hälfte der Länge des Laderaumbodens 1 erstreckt. Die Trägerplatte 6 ist formstabil ausgeführt und ist an ihren gegenüberliegenden Seitenrandbereichen mit jeweils zwei Funktionsschlitten 8 versehen, die einander auf gleicher Höhe paarweise gegenüberliegen. Die beiden in Fahrzeuglängsrichtung vorderen Funktionsschlitten 8 weisen jeweils eine Schwenklagerung 10 für die Trägerplatte 6 auf, wodurch die Trägerplatte 6 um eine in Fahrzeugquerrichtung verlaufende Schwenkachse S (Fig. 6) relativ zu den beiden vorderen Funktionsschlitten 8 schwenkbeweglich gelagert ist. Die beiden hinteren Funktionsschlitten 8 sind an der Unterseite der Trägerplatte 6 befestigt (Fig. 2). Um von oben her die Betätigung der Betätigungstaste 9 für jeden Funktionsschlitten 8 zu ermöglichen, ist in der Trägerplatte 6 eine entsprechende Aussparung 17 vorgesehen (Fig. 7).

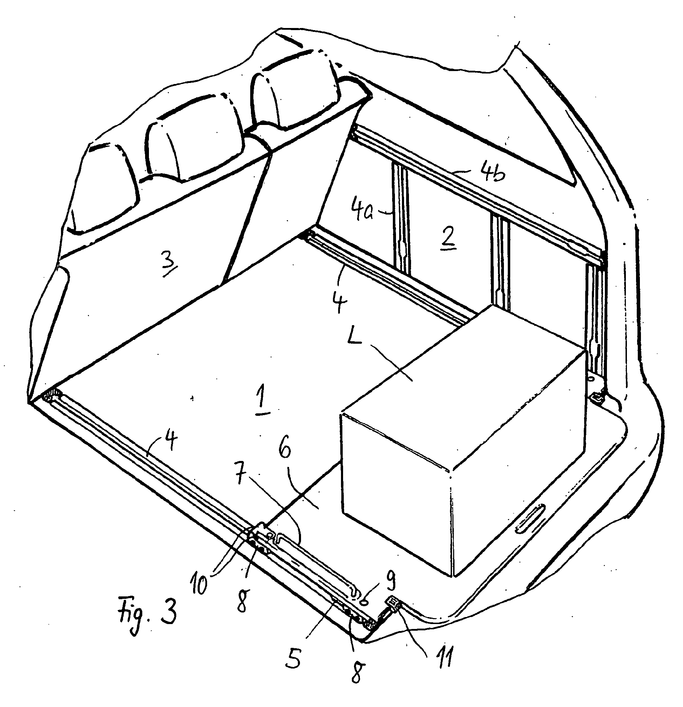

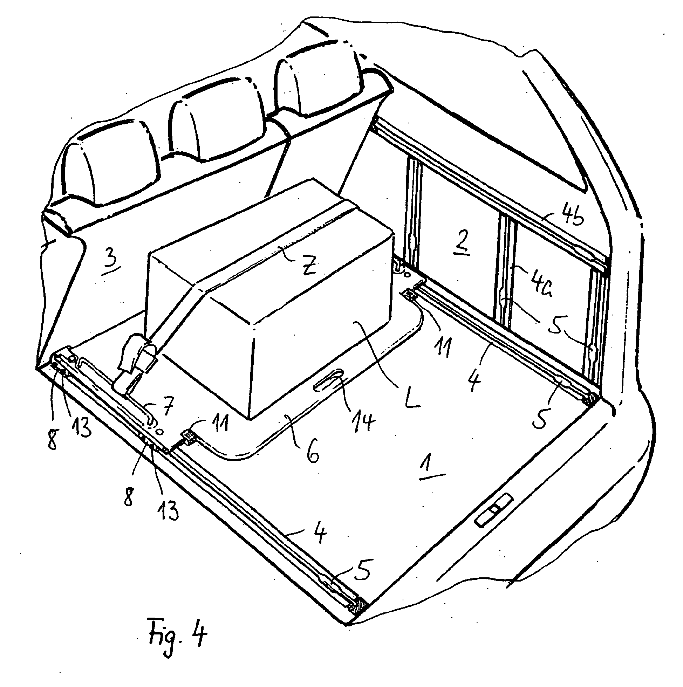

Die Trägerplatte 6 ist durch die insgesamt vier Funktionsschlitten 8, die als Schlittenwagen ausgeführt sind, längs der beiden im Laderaumboden 1 versenkten Führungsschienen 4 verschiebbar gelagert. Eine hintere horizontale Endposition der Trägerplatte 6 ist durch die Fig. 3 und 5 dargestellt. Eine in normaler Fahrtrichtung vordere Endposition, in der die Trägerplatte 6 an der Rückenlehnenanordnung der Fondsitzbank 3 anliegt, ist in den Fig. 1 und 4 dargestellt.

Um nun die Trägerplatte 6 in eine vertikale Separierposition gemäß Fig. 2 überführen zu können, wird die Trägerplatte zunächst so weit nach hinten verschoben, bis die beiden hinteren Funktionsschlitten 8 sich auf Höhe der hinteren Aussparungen 5 der Führungsschienen 4 befinden. Im Bereich dieser Aussparungen 5 liegen die T-förmigen Sicherungsprofile der Funktionsschlitten 8 frei, so dass die Trägerplatte 6 nach oben verschwenkt werden kann. Um eine Arretierung der Trägerplatte 6 in ihrer aufrechten Separierposition zu ermöglichen, sind Arretiermittel in Form von zwei Schiebern 11, 12 vorgesehen, die in die vertikalen Führungsnuten gegenüberliegender Führungsschienen 4a eingreifen können. Die Arretiermittel 11, 12 umfassen jeweils einen Sicherungsstift 12, der durch ein manuell bedienbares Schiebeglied 11 in seine Sicherungsposition gemäß Fig. 7 oder in seine in der Trägerplatte 6 versenkte Ruheposition gemäß den Fig. 1, 3 und 4 verschoben werden kann.

Um die Trägerplatte 6 aus der vertikalen Separierposition wieder in eine horizontale Bodenposition zu überführen, werden zunächst die Sicherungsstifte 12 mittels der Betätigungsschieber 11 nach innen geschoben, wodurch sie aus den Führungsschienen 4a freikommen. Anschließend kann die Trägerplatte 6 nach hinten umgeklappt werden und wird nun so weit in Fahrzeuglängsrichtung nach hinten verschoben, bis die hinteren Funktionsschlitten 8 wieder in die Aussparungen 5 der Führungsschienen 4 hineingleiten. Nun befindet sich die Trägerplatte 6 in ihrer Bodenposition, in der sie parallel zur Oberfläche des Laderaumbodens 1 in Fahrzeuglängsrichtung verschiebbar gelagert ist.

An der Trägerplatte 6 sind auf gegenüberliegenden Seiten zwei Verzurrbügel 7 vorgesehen, die als Verankerungselemente für Zugmittel, insbesondere für ein einstellbares Zugband Z dienen. Mittels eines derartigen Zugbandes Z kann Ladegut L auf der Trägerplatte 6 gesichert werden. Die Trägerplatte 6 ist zudem mit einer Griffaussparung 14 versehen, um ein manuelles Ergreifen der Trägerplatte 6 zu erleichtern.

Die Trägerplatte 6 kann auch vollständig aus dem Schienensystem im Laderaum entnommen werden, indem neben den hinteren Funktionsschlitten 8 auch die vorderen Funktionsschlitten 8 im Bereich der Aussparungen 5 aus den Führungsschienen 4 ausgehängt werden.

## Patentansprüche

1. Laderaumfunktionsvorrichtung für ein Kraftfahrzeug, insbesondere für einen Personenkraftwagen, mit mehreren, in wenigstens einer Begrenzungsfläche des Laderaumes integrierten Führungsschienen, die insbesondere längs und/oder quer in der Begrenzungsfläche verlaufen, sowie mit wenigstens einem Funktionsschlitten, der formschlüssig in der Führungsschiene gehalten und längs der Führungsschiene verschiebbar angeordnet ist sowie wenigstens ein Blockiermittel umfasst, das zum Freigeben oder Arretieren des Funktionsschlittens ausgebildet ist, **dadurch gekennzeichnet, dass** der Funktionsschlitten (8) mittels wenigstens eines Rollelementes (13) rollbeweglich an der Führungsschiene (4, 4a, 4b) gelagert ist.

2. Laderaumfunktionsvorrichtung nach Anspruch 1, **dadurch gekennzeichnet, dass** wenigstens eine Rollelement (13) außenseitig auf der Führungsschiene (4 bis 4b) aufliegt.

3. Laderaumfunktionsvorrichtung nach Anspruch 1, **dadurch gekennzeichnet, dass** jeder Funktionsschlitten (8) mit zwei Rollelementachsen versehen ist.

4. Laderaumfunktionsvorrichtung nach Anspruch 1, **dadurch gekennzeichnet, dass** wenigstens zwei zueinander parallel beabstandete Führungsschienen (4) vorgesehen sind, in denen jeweils wenigstens ein Funktionsschlitten (8) rollbeweglich gelagert ist.

5. Laderaumfunktionsvorrichtung nach Anspruch 4, **dadurch gekennzeichnet, dass** ein formstabiler Trägerkörper (6) vorgesehen ist, der sich zwischen den Führungsschienen (4) erstreckt und mit den Funktionsschlitten (8) verbunden ist.

6. Laderaumfunktionsvorrichtung nach Anspruch 5, **dadurch gekennzeichnet, dass** der Trägerkörper (6) als ebene Trägerplatte (6) gestaltet ist, die von den Funktionsschlitten (8) getragen ist.

7. Laderaumfunktionsvorrichtung nach Anspruch 6, **dadurch gekennzeichnet, dass** die Trägerplatte (6) an beiden Funktionsschlitten (8) um eine gemeinsame Schwenkachse (S) schwenkbeweglich gelagert ist.

8. Laderaumfunktionsvorrichtung nach Anspruch 5, **dadurch gekennzeichnet, dass** an dem Trägerkörper (6) wenigstens ein Verankerungselement (7) zur Befestigung wenigstens eines Zugmittels (Z) vorgesehen ist.

9. Laderaumfunktionsvorrichtung nach wenigstens einem der vorhergehenden Ansprüche, **dadurch gekennzeichnet, dass** die Führungsschienen (4 bis 4b) im Bereich ihrer Oberseite mit wenigstens einer Aussparung (5) zum Entfernen oder Einsetzen wenigstens eines Funktionsschlittens (8) versehen sind.

10. Laderaumfunktionsvorrichtung nach wenigstens einem der Ansprüche 6, 7 oder 9, **dadurch gekennzeichnet, dass** Mittel (11, 12) zum lösbaren laderaumseitigen Fixieren der Trägerplatte (6) in einer aufrechten, vorzugsweise einer vertikalen Separierposition vorgesehen sind.

11. Laderaumfunktionsvorrichtung nach Anspruch 7, **dadurch gekennzeichnet, dass** wenigstens zwei Funktionsschlitten (8) zu den mit der Schwenkachse versehenen Funktionsschlitten (8) beabstandet an der Trägerplatte (6) befestigt sind.

12. Laderaumfunktionsvorrichtung nach Anspruch 11, **dadurch gekennzeichnet, dass** die Blockiermittel zum Freigeben oder Arretieren der beiden Funktionsschlitten (8) eine bewegliche Betätigungstaste (9) umfassen, die durch eine Aussparung (17) in der Trägerplatte (6) hindurchragt und in einer horizontalen Bodenposition der Trägerplatte (6) von oben her zugänglich ist.

## Claims

1. Storage space functional device for a motor vehicle, in particular for a passenger vehicle, having a plurality of guide rails which are integrated in at least one boundary surface of the storage space and which extend, in particular, longitudinally and/or transversely in the boundary surface, and having at least one functional carriage which is retained in a positive-locking manner in the guide rail and which is arranged so as to be able to be displaced along the guide rail, and which comprises at least one blocking means which is constructed for releasing or arresting the functional carriage, **characterised in that** the functional carriage (8) is supported for rolling movement on the guide rail (4, 4a, 4b) by means of at least one rolling element (13).

2. Storage space functional device according to claim 1, **characterised in that** at least one rolling element (13) rests on the outside of the guide rail (4 to 4b).

3. Storage space functional device according to claim 1, **characterised in that** each functional carriage (8) is provided with two rolling-element axles.

4. Storage space functional device according to claim 1, **characterised in that** there are provided at least two guide rails (4) which are spaced-apart so as to be parallel with each other and in which at least one functional carriage (8) is supported in each case for rolling movement.

5. Storage space functional device according to claim 4, **characterised in that** there is provided a dimensionally stable carrier body (6) which extends between the guide rails (4) and which is connected to the functional carriages (8).

6. Storage space functional device according to claim 5, **characterised in that** the carrier body (6) is configured as a planar carrier panel (6) which is supported by the functional carriages (8).

7. Storage space functional device according to claim 6, **characterised in that** the carrier panel (6) is supported on the two functional carriages (8) so as to be able to be pivoted about a common pivot axis (S).

8. Storage space functional device according to claim 5, **characterised in that** at least one anchoring element (7) for securing at least one pulling means (Z) is provided on the carrier body (6).

9. Storage space functional device according to any one of the preceding claims, **characterised in that**, in the region of their top side, the guide rails (4 to 4b) are provided with at least one aperture (5) for the removal or insertion of at least one functional carriage (8).

10. Storage space functional device according to at least one of claims 6, 7 or 9, **characterised in that** means (11, 12) are provided to fix the carrier panel (6) in a releasable manner in an upright, preferably vertical, separating position at the storage space side.

11. Storage space functional device according to claim 7, **characterised in that** at least two functional carriages (8) are secured to the carrier panel (6) so as to be spaced-apart from the functional carriages (8) provided with the pivot axis.

12. Storage space functional device according to claim 11, **characterised in that** the blocking means, for releasing or arresting the two functional carriages (8), comprise a movable actuating button (9) which protrudes through an aperture (17) in the carrier panel (6) and which is accessible from above in a horizontal floor position of the carrier panel (6).

## Revendications

1. Dispositif fonctionnel d'un compartiment à bagages pour véhicule automobile, en particulier pour voiture particulière, comportant plusieurs rails de guidage intégrés dans au moins une périphérie du compartiment à bagages qui s'étendent en particulier longitudinalement et/ou transversalement dans la périphérie, et comportant au moins un chariot fonctionnel qui est maintenu par correspondance de forme dans le rail de guidage et disposé de manière coulissante le long du rail de guidage, et comprenant au moins un moyen de blocage, qui est configuré pour libérer ou arrêter le chariot fonctionnel, **caractérisé en ce que** le chariot fonctionnel (8) est logé au niveau du rail de guidage (4, 4a, 4b) de manière à pouvoir rouler à l'aide d'au moins un élément de roulement (13).

2. Dispositif fonctionnel d'un compartiment à bagages selon la revendication 1, **caractérisé en ce qu'**au moins un élément de roulement (13) repose côté extérieur sur le rail de guidage (4 à 4b).

3. Dispositif fonctionnel d'un compartiment à bagages selon la revendication 1, **caractérisé en ce que** chaque chariot fonctionnel (8) est pourvu de deux axes d'éléments de roulement.

4. Dispositif fonctionnel d'un compartiment à bagages selon la revendication 1, **caractérisé en ce qu'**au moins deux rails de guidage (4) parallèles sont prévus, dans lesquels respectivement au moins un chariot fonctionnel (8) est logé de manière à pouvoir rouler.

5. Dispositif fonctionnel d'un compartiment à bagages selon la revendication 4, **caractérisé en ce qu'**un corps support (6) indéformable est prévu qui s'étend entre les rails de guidage (4) et est relié aux chariots fonctionnels (8).

6. Dispositif fonctionnel d'un compartiment à bagages selon la revendication 5, **caractérisé en ce que** le corps support (6) est réalisé sous forme de plaque de support (6) plane, qui est portée par les chariots fonctionnels (8).

7. Dispositif fonctionnel d'un compartiment à bagages selon la revendication 6, **caractérisé en ce que** la plaque de support (6) est logée au niveau des deux chariots fonctionnels (8) de manière pivotante autour d'un axe de pivotement commun (S).

8. Dispositif fonctionnel d'un compartiment à bagages selon la revendication 5, **caractérisé en ce qu'**au moins un élément d'ancrage (7) permettant de fixer au moins un moyen de traction (Z) est prévu au niveau du corps support (6).

9. Dispositif fonctionnel d'un compartiment à bagages selon au moins l'une quelconque des revendications précédentes, **caractérisé en ce que** les rails de guidage (4 à 4b) sont pourvus dans la zone de leur face supérieure d'au moins un évidement (5) permettant de retirer ou d'insérer au moins un chariot fonctionnel (8).

10. Dispositif fonctionnel d'un compartiment à bagages selon au moins une des revendications 6, 7 ou 9, **caractérisé en ce que** des moyens (11, 12) servant à la fixation amovible côté compartiment à bagages de la plaque de support (6) sont prévus dans une position de séparation debout, de préférence verticale.

11. Dispositif fonctionnel d'un compartiment à bagages selon la revendication 7, **caractérisé en ce qu'**au moins deux chariots fonctionnels (8) sont fixés au niveau de la plaque de support (6) à distance des chariots fonctionnels (8) dotés de l'axe de pivotement.

12. Dispositif fonctionnel d'un compartiment à bagages selon la revendication 11, **caractérisé en ce que** les moyens de blocage permettant de libérer ou d'arrêter les deux chariots fonctionnels (8) comprennent une touche d'actionnement (9) mobile, qui traverse un évidement (17) dans la plaque de support (6) et est accessible depuis le haut lorsque la plaque de support (6) adopte une position horizontale.
